# FASCICULE DE BREVET EUROPEEN

(11) **EP 1 234 759 B1**
(45) Date de publication et mention de la délivrance du brevet: **20.09.2006**
(21) Numéro de dépôt: 01810194.9
(22) Date de dépôt: 24.02.2001
(51) Int. Cl.: B62K 19/16

(54) **Cadre mono pièce pour véhicule deux roues à moteur**
Zweirad- Kraftfahrzeug mit selbsttragender Karosserie
Monocoque frame for a two-wheel motor vehicle

(43) Date de publication de la demande: 28.08.2002
(73) Titulaire: Salamin, Ivan, 3960 Sierre (VS) (CH); Melly, Gerard, 3965 Chippis (VS) (CH); Mayor, Christian, 1870 Monthey (VS) (CH)
(72) Inventeur: Salamin, Ivan, 3960 Sierre (VS) (CH); Melly, Gerard, 3965 Chippis (VS) (CH); Mayor, Christian, 1870 Monthey (VS) (CH)

(56) Documents cités:
- DE-A- 4 224 120
- FR-A- 830 132
- FR-A- 2 202 489
- GB-A- 2 037 678
- US-A- 4 265 330
- PATENT ABSTRACTS OF JAPAN vol. 2000, no. 04, 31 août 2000 (2000-08-31) & JP 2000 016368 A (KAWASAKI HEAVY IND LTD), 18 janvier 2000 (2000-01-18)
- PATENT ABSTRACTS OF JAPAN vol. 1995, no. 06, 31 juillet 1995 (1995-07-31) & JP 07 081648 A (SUZUKI MOTOR CORP), 28 mars 1995 (1995-03-28)

## Description

La présente invention concerne un procédé de production des cadres pour véhicules deux roues à moteur comme par exemple des motos, des scooters, des motocyclettes légères réalisés en une pièce taillée dans une masse de métal, d'alliage(s) ou de matériaux composites.

Le cadre pour les véhicules deux roues à moteur représente l'ossature du véhicule et sert de support à l'ensemble des pièces moteur, transmission, partie cycle, carénage etc. Les cadres sont généralement réalisés par assemblage mécanique, soudure, etc. de plusieurs éléments comme profilés hydrau - formés, tôles usinées, tubes et tubulures formant l'ensemble fini appelé cadre.

L'invention concerne la réalisation de cadres dans un élément unique, d'une ou de plusieurs matières, appelé bloc comprenant la fixation des éléments de suspension avant et arrière. Le cadre est obtenu par enlèvement de matière du bloc par exemple par usinage avec une machine à commande numérique, électroérosion, etc. L'invention offre la possibilité d'intégrer à l'intérieur de la masse du cadre (initialement le bloc) des éléments complémentaires du véhicule ou l'intégration d'éléments de fixation pour d'autres partie du véhicule.

L'invention, selon la revendication 1, permet d'éviter l'assemblage de plusieurs éléments pour la réalisation du cadre et supprime les contraintes liées à ces assemblages ou aux éléments permettant l'assemblage (soudure, fixation mécanique, etc.)
Elle permet par ce principe de garantir l'uniformité de la matière composant le cadre (bloc mono élément).
Elle permet de simplifier le processus de fabrication en réduisant le nombre d'éléments faisant partie du véhicule et en évitant l'assemblages de ces éléments.
L'invention permet de plus d'intégrer des éléments du véhicule à l'intérieur même de la masse du cadre (bloc usiné) comme par exemple certaines parties des éléments de transmission primaire, secondaire, boite à vitesse, embrayage, carter moteur, etc. L'intégration des éléments de transmission rend le moteur très facilement démontable du reste de la structure (appelé cassette de propulsion).
L'invention permet aussi d'intégrer au cadre les éléments de fixations des autres parties du véhicules comme par exemple la fixation du moteur, les passages de câbles, suspension, etc. en limitant l'utilisation de pièces de fixation ou de pièces rapportées nécessaire normalement à la fixation de ces éléments.
Le concept de fixation du moteur, permet un changement rapide de celui-ci par simple déboulonnage de la fixation au cadre introduisant un notion de moteur interchangeable appelé cassette de propulsion.

L'invention est décrite ci-après à l'aide des références aux dessins joints:

La vue A est une vue latéral du cadre.

La vue B est une vue de détail de la vue A représentée à l'aide d'une photo d'une maquette prototype.

La vue C est une vue en trois dimensions du cadre de profil.

La vue D est une vue de la vue C représentée à l'aide d'une photo d'une maquette prototype.

La maquette des vues B et D (photos) a était réalisée par collage successif d'éléments. Elle ne servent qu'à faciliter la compréhension de l'invention et ne représente pas une manière de faire, d'exécuter, etc.

La vue A représente le cadre du véhicule réalisé dans une bloc (IV représentation du bloc). Elle comprend par exemple la représentation de l'intégration à l'intérieur de la masse d'éléments complémentaires comme la boîte à vitesse (I).
Elle représente aussi un mode de fixation du bras oscillant arrière (II).
La fixation du moteur (cassette de propulsion) est réalisée au travers du support (V).

La vue C représente le cadre du véhicule réalisé dans un blocs (IV) ainsi qu'un mode de fixation de la fourche (III).

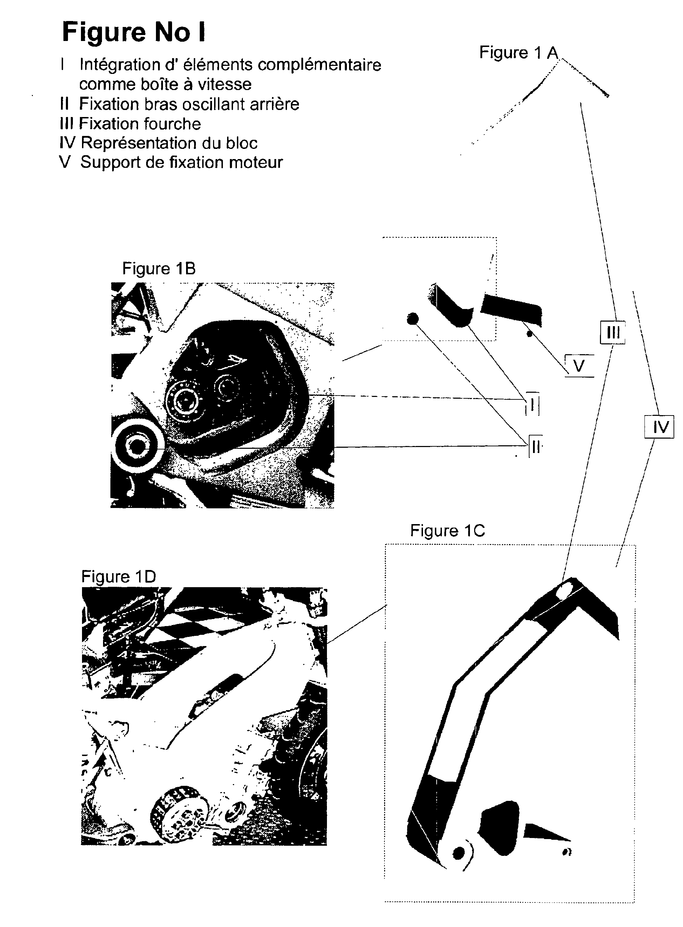

## Revendications

1. Un procédé de production d'un cadre monobloc pour les véhicules deux roues à moteur ; le procédé est **caractérisé en ce qu**'il comporte les étapes suivantes :
- préparation d'un bloc unique solide de matière,
- travail du bloc par enlèvement de matière, par exemple par usinage, pour obtenir un cadre monobloc incluant les fixations de suspension avant et arrière voire même les éléments de transmission comme la boîte à vitesses et l'embrayage.

2. Procédé de production d'un cadre monobloc selon la revendication 1, **caractérisé en ce qu**'il comporte une étape supplémentaire afin d'obtenir des éléments de fixation du moteur.

## Claims

1. A production process for monobloc frames destined for two-wheeled engine-powered vehicles; the process is **characterised by** the following stages:
- preparation of a single, solid block;
- the block is produced by removing material, for example by machining, to obtain a monobloc frame which includes front and rear suspension mountings and even the transmission components, such as the gearbox and clutch.

2. A production process for monobloc frames as per claim 1, **characterised by** an additional stage in order to obtain the engine mounting elements.

## Patentansprüche

1. Herstellungsprozess eines Monoblock-Rahmens für Zweiradmotorfahrzeuge ; Dieser Herstellungsprozess beinhaltet folgende Arbeitsschritte :
- Vorbereitung eines Einzelblocks von festem Material,
- Zerspanende Verarbeitung des Blocks, z.B. durch Bearbeitung, um einen Monoblock-Rahmen anzufertigen, der die Befestigungsvorrichtungen für die Aufhängungen vorn und hinten, und sogar die Übertragungselemente, wie das Getriebe und die Kupplung enthält.

2. Herstellungsprozess eines Monoblock-Rahmens gemäss Patentanspruch 1, einschliesslich eines zusätzlichen Arbeitsvorgangs zur Anfertigung der Befestigungselemente des Motors.
